# EUROPEAN PATENT APPLICATION

(11) **EP 1 109 115 A1**
(43) Date of publication of application: **20.06.2001**
(21) Application number: 99124939.2
(22) Date of filing: 14.12.1999
(51) Int. Cl.: G06F 17/30

(54) **Merging driver for accessing multiple database sources**

(71) Applicant: SUN MICROSYSTEMS, INC., Palo Alto, California 94303 (US)
(72) Inventor: Laux, Thorsten, 20099 Hamburg (DE)
(74) Representative: Betten & Resch

(57) **Abstract**

The invention relates to a method for accessing by a single access multiple database sources of a database, said multiple sources requiring to be accessed by different drivers, said method comprising: providing a common API for individually accessing said multiple sources through said corresponding drivers; and providing a merging driver for accessing a plurality of said sources by a single access through said common API respectively accessing said multiple sources through said corresponding drivers.

## Description

### FIELD OF THE INVENTION

The present invention relates to the access of a database having multiple database sources, and more particularly, the invention relates to the access of said multiple database sources by a single search or query.

### DESCRIPTION OF THE RELATED ART

There are known databases where the data to be accessed is distributed over multiple data sources, such as different directories, different servers, etc., and where the different data sources have different formats. In this case in known systems only one data source can be accessed by a single search or a query. To access multiple sources in known systems the user has to dispatch multiple queries directed to the multiple sources.

There is therefore a need for providing the user with the capability to search by a single query data distributed over more than one data source, since the data needed by the user may be spread over the different sources containing respectively different data tables or databases of different formats.

### SUMMARY OF THE INVENTION

According to an aspect of the present invention there is provided a method for accessing multiple database sources of a database by a single access or query. The multiple sources may have different formats and may need to be accessed by different drivers, and there is provided a common application programming interface (API) for individually accessing the multiple sources through said corresponding drivers. The access to multiple sources by a single access operation from the user can be achieved by the provision of a merging driver which accesses the plurality of sources by accessing the corresponding drivers through a common API.

In other words, for each source of a different format there is a corresponding driver, those plurality of different drivers can be accessed by a common API, and a merging driver utilizes the common API for attaining a merging access to a plurality of sources requiring different drivers, by causing the common API to perform access operations to said plurality of sources in response to a single access to the merging driver. The merging driver therefore acts as a kind of a generator for generating a plurality of queries to different sources having different formats or requiring different drivers in response to a single query to the merging driver.

It may therefore be said that the provision of the merging driver provides a kind of a "virtual" database, where multiple sources requiring individually different drivers are accessed under the roof of a common API, the merging driver using the common API to access the multiple sources such that they can be queried through a single query. An application program or a user interface may access the merging driver through its API to access multiple sources by a single access operation.

Preferably the merging driver can be configured by a user in order to define which of the available sources are to be simultaneously accessed through a single access to the merging driver.

Preferably from a user's point of view the merging driver is configured such that it looks to the outside world, or better to say to the user interface, like a database source itself. This means that the user can access the merging driver like a single source, however, this single source actually comprises multiple database sources which are accessed by a single access operation.

Preferably there is provided an option to perform an autocompletion procedure for the outputs obtained through the single access achieved by said merging driver to multiple sources. It is then for example possible that a user configures a merging driver for those sources only for which performing an autocompletion makes sense, which means for sources which are not too large to perform an autocompletion procedure, since an autocompletion requires a lot of RAM and processing power.

The multiple sources can be databases which are separate from one another, they may be in different locations, may be of different kinds, and may require the use of different query engines to access their data. For example, one may be a StarBase database, another may be a database of another kind accessible via a corporate intranet or via the internet, etc. The user can through the merging driver access such multiple databases with a single query and work with the data collected from these databases as if they had been obtained from a single database. Thereby there is created a kind of "virtual database" based on the multiple sources (which may themselves be different databases).

A user can specify the sources or databases of the "virtual database" to be accessed, and defines a query or any other access operation to all of the sources specified. The user's query is translated by the merging driver into corresponding queries which are addressed to the specified sources (or databases), and then retrieves the requested data from these databases. The so retrieved data may then be used to generate a serial letter, a form letter, or the like by an application program such as a word processor.

The user can therefore retrieve data from multiple and dissimilar databases by using a single user interface and a single query language, and the retrieved data can be manipulated as a whole rather in segments according to source, so that operations such as sorting are carried out on all of the retrieved data.

The great advantage and utility of the present invention lies in the fact that a user by a single query (or any other access operation, e.g. for editing) can access data which may be distributed over multiple sources, let them be databases, database tables, or any other sources which may require different drivers for being accessed due to their different formats. By specifying the sources to be accessed a user can "merge" different sources into a "virtual" database which looks to the user like a single database but which is actually a grouping of several databases or sources selected by the user, so that a single query can provide him with results which are retrieved from different sources.

If the database is for example an address book, then the present invention enables the user to generate serial letters based on a single address book query, although the addresses he needs may be distributed over multiple sources which themselves are accessed through different drivers.

Further features and advantages will become apparent from the following detailed description which explains the present invention through preferred embodiments in connection with the accompanying drawings.

### BRIEF DESCRIPTION OF THE DRAWINGS

Fig. 1 shows a block diagram of a computer system to be used with a preferred embodiment of the present invention.

Fig. 2A schematically shows a database having different data sources.

Fig 2B schematically shows a database having different data sources, one of them being a merging source.

Fig. 3 schematically shows an access to a database having different data sources.

Fig. 4 schematically shows the access to multiple data sources by a single query according to a preferred embodiment of the present invention.

Fig. 5A schematically shows the access of the multiple sources through a single query.

Fig. 5B schematically shows the obtaining and ordering of the results.

Fig. 6 schematically shows a user's perspective of an access as illustrated in Fig. 4.

Fig. 7 shows a flowchart of a database access according to a preferred embodiment of the present invention.

Fig. 8 schematically illustrates a merging driver for accessing multiple sources.

Fig. 9 shows the configuration of a merging driver according to a preferred embodiment of the present invention.

Fig. 10 shows a flowchart illustrating in more detail the accessing step shown in Fig. 7.

### DETAILED DESCRIPTION OF THE PREFERRED EMBODIMENTS

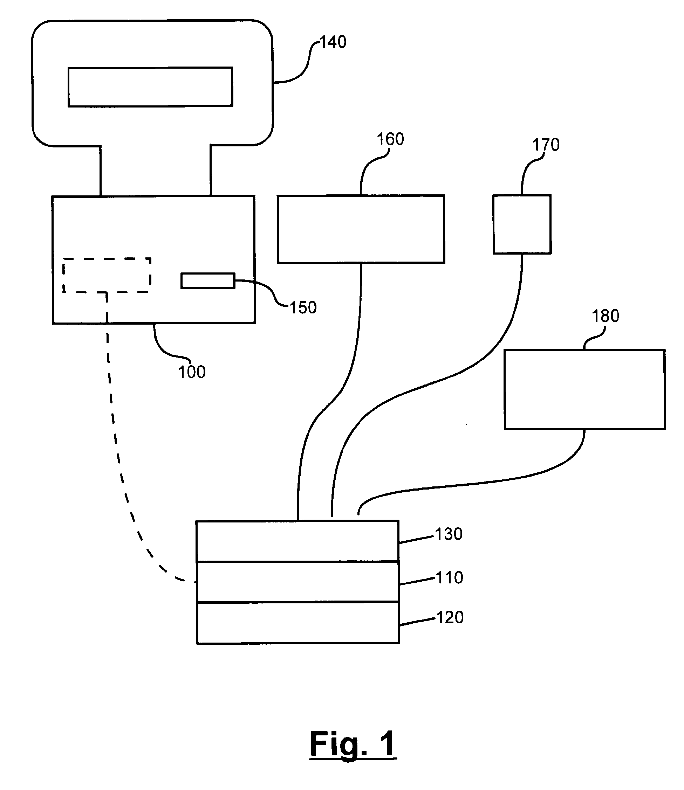

Fig. 1 schematically shows the configuration of a computer system to be used in connection with the preferred embodiment of the present invention. The computer 100 contains a CPU 110, a memory 120, and an I/O-unit 130. The computer 100 is capable of executing programs by carrying out computer instructions through CPU 110 which the CPU fetched from memory 120 and which may have been stored in a storage device 150 such as a CD-ROM or a floppy disk. The I/O-unit 130 is connected to a keyboard 160 and a mouse 170 to enable a user to input data to the computer, and it is further connected to a printer 180 to output documents as hardcopies. Computer 100 is further connected to a display unit 140 such as a monitor.

Those skilled in the art will readily recognize that the foregoing combination is just an illustrative example and not to be understood as limiting the features and advantages of the present invention as outlined in the following.

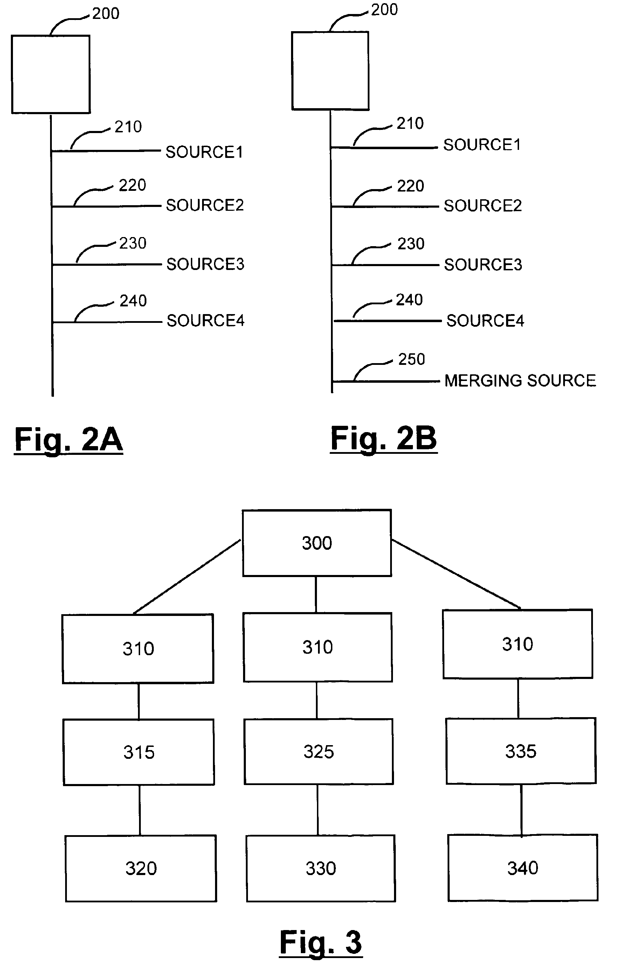

Fig. 2A shows an example for a database which has multiple sources containing data of different formats and requiring different drivers for being accessed. The example shown in Fig. 2 is the address book of the StarOffice Software Package produced by Sun Microsystems, Palo Alto, CA. Fig. 2A shows the address book in a tree view as seen by the user when the StarOffice software is running on his computer.

The node 200 of the tree is labelled address book, and the leaves of the tree are the individual sources SOURCE1 210, SOURCE2 220, SOURCE3 230, and SOURCE4 240. The SOURCE1 210 is now for example a LDAP source, which means that the data in this source is stored according to the LDAP (lightweight directory access protocol) format and have to be accessed by a LDAP driver. The source SOURCE2 210 may be a database where data is stored in tables according to a certain database software, such as StarBase being part of the StarOffice package, produced by Sun Microsystems, Palo Alto, CA. This means that the SOURCE2 220 is to be accessed by a different driver, which in fact is the database software StarBase.

The source SOURCE3 230 may be another source also requiring a certain driver different from the ones for the source 210 and source 220. Finally, the source "SOURCE4" 240 is another source requiring again a different driver, it may for example be the source "SCHEDULE" containing the users which are registered as users of the StarOffice schedule software, being part of the StarOffice Suite produced by Sun Microsystems, Palo Alto, CA.

Each of the sources 210 to 240 as well as the corresponding node 200 are to be understood as being for exemplary purposes only, the present invention may be employed in connection with any grouping of different sources which may themselves be databases of different kinds and which can be accessed through a common front end shown as element 200 in Fig. 2A. It will later be described how a single access through element 200 can retrieve data from a plurality of the sources shown in Fig. 2A.

The grouping of several sources 210 to 240 requiring different drivers and their access through the common front end or user interface 200 shown in Fig. 2A will now be further explained in connection with Fig. 3. Fig. 3 shows the access to different sources 320, 330, and 340 by a user through user interface 300. Each of the different sources 320, 330, and 340 is accessed by a correspondingly different driver 315, 325, and 335. From the side of a user interface 300 these different drivers can be accessed through a common API 310. This means that a user can access through user interface 300 the API 310 which is the same for all of the different drivers 315, 325, and 335. For the user interface 300 there are different sources which may be accessed, however, there is only one single API through which such an access to the different sources can be carried out. Based on such a configuration and by further providing a merging driver described in the following, it becomes possible to simultaneously access a plurality of different sources by a single access operation. This will now be described in more detail in the following.

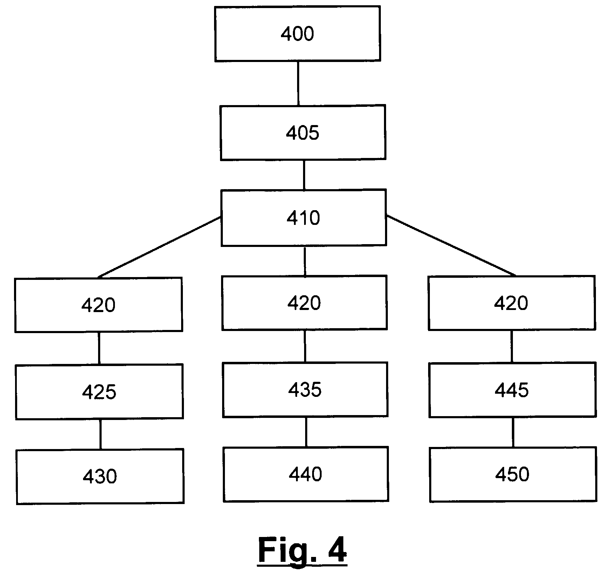

Fig. 4 schematically illustrates how by a single access operation (such as a query) multiple sources 430, 440, and 450 can be accessed as if they were a single source (a single database). For that purpose there is provided the merging driver 410 which has the task of distributing a query (or any other access operation) which it has received from user interface 400 through its own API 405 to the different drivers 425, 435, and 445 through their corresponding API 420, which is identical for all of those different drivers. The merging driver 410 therefore performs a kind of a demultiplexing operation for any access operation which it receives. Any corresponding instruction or sequence of instructions is just distributed through the different sources through their corresponding drivers and their common API.

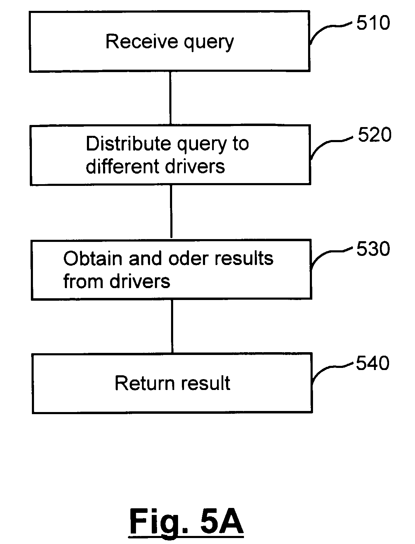

Fig. 5A schematically shows a flow chart illustrating the operation of the merging driver. The merging driver in step 510 receives a query (or any other access instruction) from a user interface, it distributes the query to the different drivers in step 520, in step 530 it obtains and orders the results from the drivers, for example alphabetically or according to any other criterion, and finally in step 540 the result is output to the user interface.

Ordering the result can be performed together with obtaining the result by obtaining from a source only a result if it matches the ordering criterion. If the ordering criterion is "order alphabetically according to title", then for example a result starting with character "B" from one source is not obtained as long as the other sources do not offer higher ranking results, such as results starting with character "A".

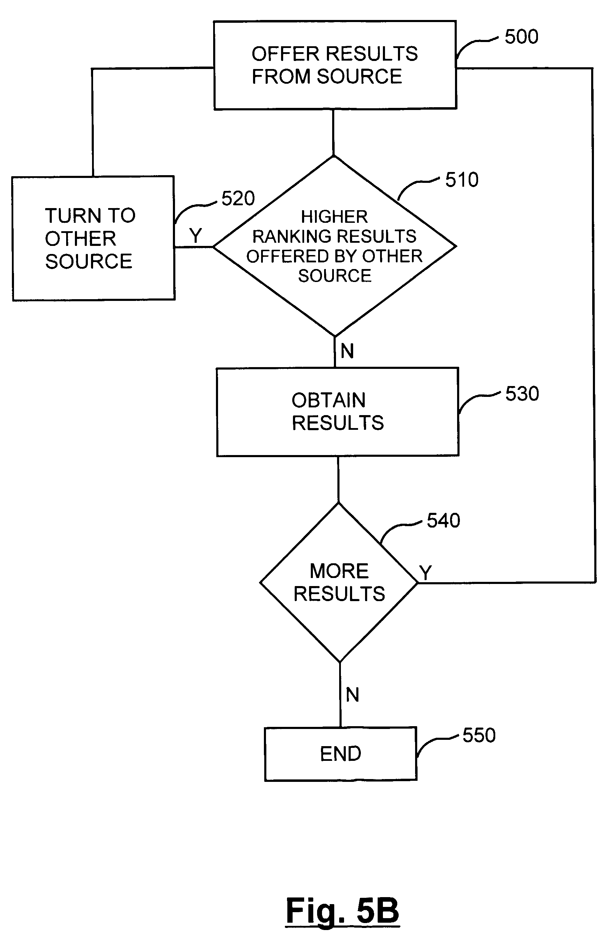

This is schematically illustrated in Fig. 5B. An result offered by a source (or its driver) in step 500 is checked in step 510 as to whether there exist higher-ranking results based on the ordering criterion. Examples for an ordering criterion are "order alphabetically" or "order numerically". If another source offers such a higher-ranking result then in step 520 attention is turned to this source, then returning to step 500. If no higher-ranking result is offered, then the offered result is obtained in step 530. The result may then be returned as an output, it may, howewer, also be buffered to return a plurality of outputs which have been buffered simultaneously. Step 540 checks whether there are more results, if so then it returns to step 500. If no further results are offered, then the obtaining and ordering of the results is finished in step 550. In accordance with the foregoing the result may be obtained in an ordered manner.

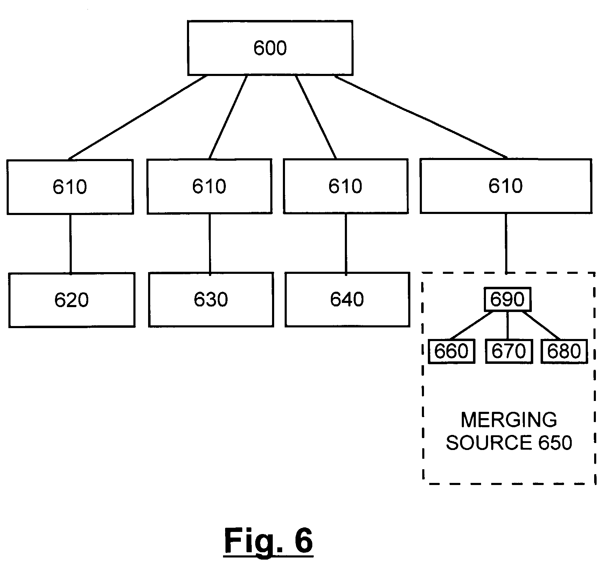

A particular feature of the configuration explained hereinabove, namely how a merging driver looks like from the side of the user interface, is explained in connection with Fig. 6. Fig. 6 shows a user interface 600, sources of different kinds 620, 630, 640, and 650 (the corresponding drivers here are not shown) and an API 610 identical for all of the different sources. In Fig. 6, however, source 650 may be a "merging source", which means that with an access to source 650 actually a plurality of different databases which are dissimilar is accessed at one time. However, since those different databases all are accessed through the same API, and since the merging driver explained before distributes a query to the different sources, from the outside world such a grouping of sources accessed through a merging driver does not look different than an individual source itself. Such a grouping of different sources (or different databases) accessed through the merging driver from the outside world looks like any other source which can be accessed through the single API 610, although it actually consists of multiple sources such as sources 660, 670, and 680 shown in Fig. 6. Those multiple sources are accessed through their corresponding merging driver 690, and since this merging driver makes used of the common API of the sources 660, 670, and 680 (which is identical to API 610 of the other sources) it can itself be accessed though API 610. In other words, the merging driver is implemented such that from the outside world it can be accessed though the same API 610 as the other sources 620 to 640.

Those skilled in the art will readily recognize that with such a concept it also becomes possible that one of the sources 660 to 680 which are merged by merging driver 690 as explained in connection with Fig. 6 may itself be a source consisting of different sources (a "merging source") as element 650 in Fig. 6.

Therefore, through the concept of the provision of a common API for all of the different drivers, and further through the provision of a merging driver performing a kind of a demultiplex operation distributing a query to the different sources, the grouping of different sources to a "virtual database" which looks from the outside world like a single database becomes possible in a very easy manner. Moreover, each of the individual sources grouped together in such a "virtual database" may itself consist of a grouping of different sources.

Therefore, in a tree view as seen by a user and as illustrated in Fig. 2A, in accordance with the scheme of Fig. 6 there may be a further leaf labelled "merging source" as shown in Fig. 2B which indicates a source consisting of a plurality of sources of different kinds merged together through a demultiplex operation performed by the merging driver.

In connection with Fig. 4 there has been described how the merging driver operates for three different sources 430, 440, and 450. The sources on which the merging driver operates may be selected or specified by a user to configure the merging driver. Such a configuration of the merging driver will now be described in somewhat more detail in the following.

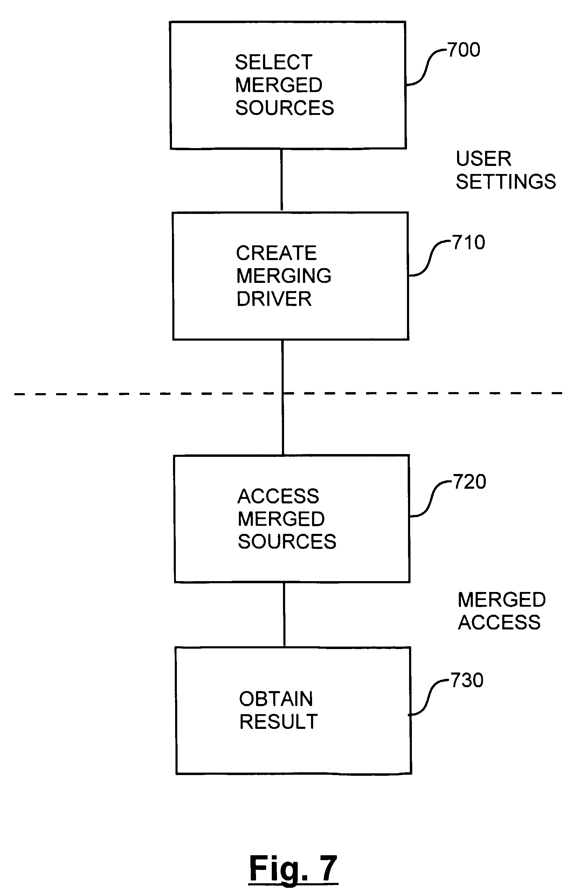

Fig. 7 in its upper half shows the steps necessary for configuring a merging driver. At first in step 700 a user has to select the sources which are to be merged. In step 710 then there is created a merging driver based on the selections made by the user. This merging driver is then in step 720 used to access the multiple sources, and in step 730 it obtains a result from the thereby accessed sources.

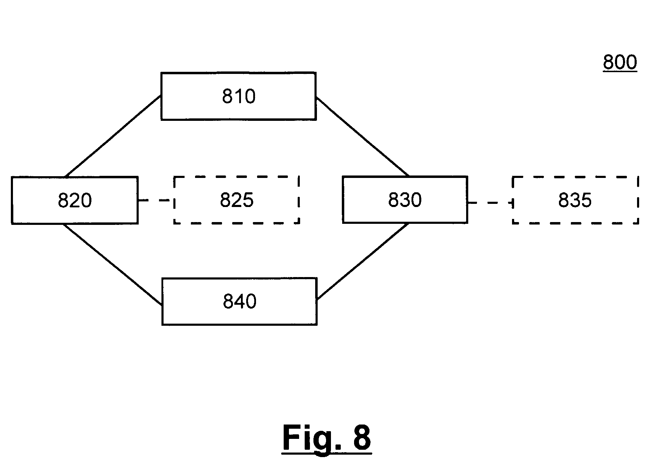

Fig. 8 schematically shows a merging driver created in accordance with the user's selections for accessing two different sources 825 and 835, those sources being not a part of the merging driver 800. Merging driver 800 contains a receiving module 810 for receiving queries or access instructions from a user interface (or any application program), modules 820 and 830 for distributing the corresponding query to the sources 825 and 835 (not being a part of the merging driver) as specified by the user and for obtaining the results from those sources, and it further contains a module 840 for ordering the results which are retrieved from the different sources and for returning the ordered result to the user interface.

It should be mentioned that such a merging driver as shown in Fig. 8 which has been created according to the user's preferences may be stored and may be given a certain name, so that it is available at any later stage for simultaneous access to the multiple sources for which it has been configured.

Once a merging driver has been configured and having been labelled by a certain name, it then shows up with its corresponding name in the tree view of Fig. 2B. It can then be used for accessing those database sources for which it has been configured by a single query.

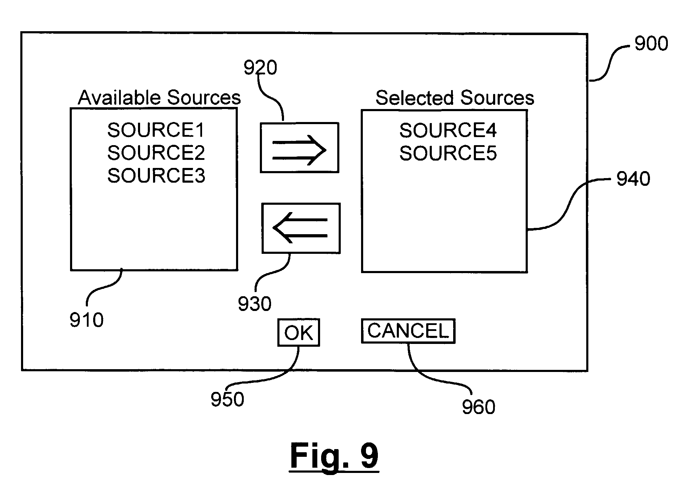

The step of selecting the merged sources is now explained in somewhat more detail in connection with Fig. 9. Fig. 9 shows a window 900 displayed to the user to enable him to configure the merging driver. In the left-hand part 910 all possible sources are listed, and by means of buttons 920 and 930 the user can select or deselect some of them, the selected ones then showing up in the right-hand part 940. By pushing the OK-button 950 the user can complete the selection.

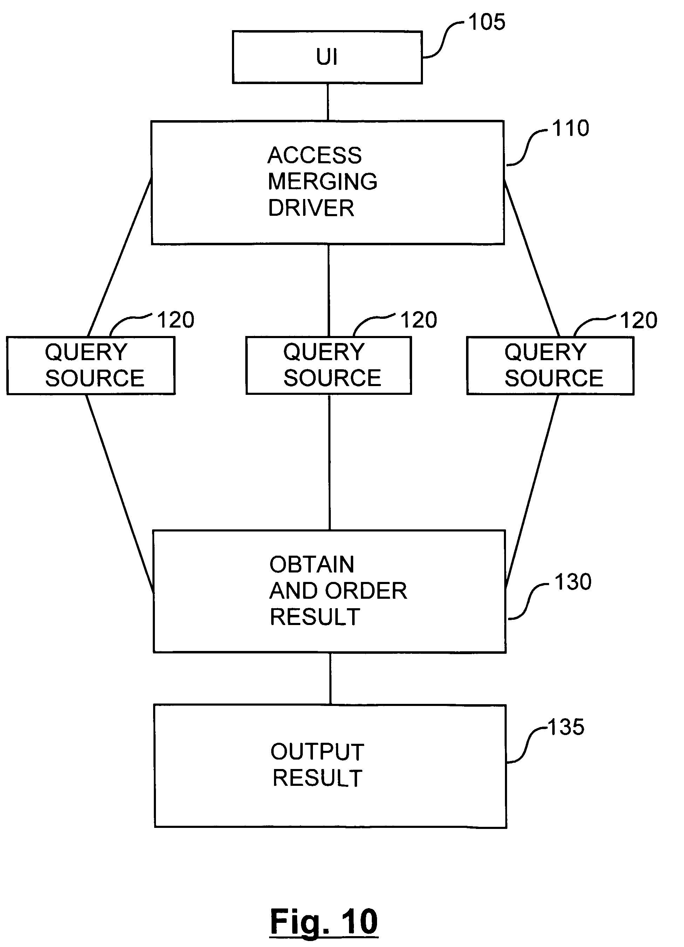

The operation of a so configured merging driver for three different sources is schematically illustrated in Fig. 10. The user inputs a single query into user interface 105 through which the merging driver 110 is accessed. The merging driver then generates multiple queries for the individual sources by distributing the single query to the different sources in step 120, one query for each of the different sources requiring different drivers. Thereby through the generation of multiple queries and the usage of corresponding multiple drivers with an identical API a query result is obtained and ordered in step 130 and is output in step 140.

The merging driver may be used in connection with an option for autocompletion, which means that after having input only a part of the desired query result it is automatically completed based on what is returned from the source. Such an autocompletion procedure, however, requires a lot of RAM, and therefore there may for example be configured one merging driver for those sources only for which the autocompletion makes sense. Another merging driver which works without autocompletion may be configured for a different combination of database sources.

In case of the above-described "virtual" database which can be queried by a single query through the merging driver being an address book, the user can based on a single query generate serial letters or form letters although the data he needs for generating the serial letters may be distributed over multiple database sources actually requiring different drivers for being accessed.

It should further be mentioned that the merging driver may not only be accessed by a user interface, but by any application program which is capable of accessing the API which the merging driver offers to the outside world for accessing it. Such an application program may for example be a word processor, it might even be again a database program, or any other application program for which it makes sense to access the "virtual database" described hereinbefore. It should further be mentioned that the merging driver not only can be used for distributing a single query to multiple sources, but rather that any operation (any access operation) to be performed on multiple sources (such as updating or editing data in the sources) can be carried out based on a single access operation input which then is distributed by the merging driver.

Those skilled in the art will readily recognize that the individual steps and elements of the preferred embodiments of the invention as explained before can be implemented by a software tool or a computer program, and they then represent corresponding computer program code portions which cause the CPU of the computer to execute instructions which finally represent the corresponding steps or elements of the present invention. It will be understood that the steps of Fig. 8 (and other flow charts in this document as well as elements of the invention shown therein) represent actions performed by the CPU of a computer in accordance with computer instructions of a software tool or a computer program.

The computer instructions can also be stored on a computer-readable medium capable of embodying computer instructions, such as a CD-ROM, a floppy-disk, or any transmission link like a connection to the internet, a link to a LAN, etc.

Application code or computer program instructions may be embodied in any form of a computer program product. A computer program product comprises a medium configured to store or transport computer-readable code, or in which computer-readable code may be embedded. Some examples of computer program products are CD-ROM disks, ROM cards, floppy disks, magnetic tapes, computer hard drives, servers on a network, and carrier waves. It may also comprise any signal which does not use carrier waves, such as digital signals transmitted over a network (including the internet) without use of a carrier wave. It may then be in the form of any transmission link suitable to transmit information from one location to another, such as a link through a public switched telephone network, a LAN connection, a WAN connection, or the like. This may lead to an implementation where some or all elements of the invention are implemented on a server, and some or none of the elements of the invention are implemented on a client accessing the server. Through access to the server, the client may then in cooperation with the server implement a computer program embodying an implementation of the present invention or it may use a computer program embodying an implementation of the present invention by accessing the server.

While the present invention has been explained in connection with certain embodiments thereof, other embodiments will be apparent to those skilled in the art from consideration of the. specification and practice of the invention disclosed therein. It is intended that the specification and examples be considered as exemplary only, without limiting the spirit and scope of the invention.

## Claims

1. A method for enabling access of multiple sources (430, 440, 450) of a database (200) by a single access, said multiple sources requiring to be accessed by different drivers (425, 435, 445), said method comprising:
providing a common API (420) for individually accessing said multiple sources through said corresponding drivers; and
providing a merging driver (410) for accessing a plurality of said sources by a single access through said common API respectively accessing said multiple sources through said corresponding drivers.

2. The method of claim 1, wherein said merging driver (410) distributes a single access instruction to a plurality of said different drivers (425, 435, 445).

3. The method of claim 1, further comprising:
obtaining a selection of the multiple sources to be accessed by a single access from a user to configure said merging driver.

4. The method of claim 1, wherein said single access is a search or a query in said database.

5. The method of claim 1, further comprising:
generating multiple queries by said merging driver, each of said query accessing one of said plurality of sources to be accessed by said merging driver.

6. The method of claim 1, further comprising:
obtaining an ordered result of said access.

7. The method of claim 6, wherein obtaining the ordered result comprises:
if more than one results are offered, obtaining the results according to their priority based on an ordering criterion.

8. The method of claim 1, further comprising:
performing an autocompletion for the outputs obtained through said single access.

9. The method of claim 1, wherein
said merging driver (550) forms one of the sources which can be accessed through said common API (510).

10. A software tool for enabling access of multiple sources (430, 440, 450) of a database (200) by a single access, said multiple sources requiring to be accessed by different drivers (425, 435, 445), said software tool comprising:
a portion configured for providing a common API (420) for individually accessing said multiple sources through said corresponding drivers; and
a portion configured for providing a merging driver (410) for accessing a plurality of said sources by a single access through said common API respectively accessing said multiple sources through said corresponding drivers.

11. The software tool of claim 10, wherein said merging driver (410) distributes a single access instruction to a plurality of said different drivers (425, 435, 445).

12. The software tool of claim 10, further comprising:
a portion configured for obtaining a selection of the multiple sources to be accessed by a single access from a user to configure said merging driver.

13. The software tool of claim 10, wherein said single access is a search or a query in said database.

14. The software tool of claim 10, further comprising:
a portion configured for generating multiple queries by said merging driver, each of said query accessing one of said plurality of sources to be accessed by said merging driver.

15. The software tool of claim 10, further comprising:
a portion configured for obtaining an ordered result of said access.

16. The software tool of claim 15, wherein obtaining the ordered result comprises:
if more than one results are offered, obtaining the results according to their priority based on an ordering criterion.

17. The software tool of claim 10, further comprising:
a portion configured for performing an autocompletion for the outputs obtained through said single access.

18. The software tool of claim 10, wherein
said merging driver forms one of the sources which can be accessed through said common API.

19. A computer program for enabling access of multiple sources (430, 440, 450) of a database (200) by a single access, said multiple sources requiring to be accessed by different drivers (425, 435, 445), said computer program comprising:
a computer program code portion for providing a common API (420) for individually accessing said multiple sources through said corresponding drivers; and
a computer program code portion providing a merging driver (410) for accessing a plurality of said sources by a single access through said common API respectively accessing said multiple sources through said corresponding drivers.

20. The computer program of claim 19, wherein said merging driver (410) distributes a single access instruction to a plurality of said different drivers (425, 435, 445).

21. The computer program of claim 19, further comprising:
a computer program code for obtaining a selection of the multiple sources to be accessed by a single access from a user to configure said merging driver.

22. A computer program product comprising computer program code for enabling access of multiple sources (430, 440, 450) of a database (200) by a single access, said multiple sources requiring to be accessed by different drivers (425, 435, 445), said computer program code comprising:
a computer program code portion for providing a common API (420) for individually accessing said multiple sources through said corresponding drivers; and
a computer program code portion providing a merging driver (410) for accessing a plurality of said sources by a single access through said common API respectively accessing said multiple sources through said corresponding drivers.

23. The computer program product of claim 22, wherein said merging driver (410) distributes a single access instruction to a plurality of said different drivers (425, 435, 445).

24. The computer program product of claim 22, further comprising:
a computer program code portion for obtaining a selection of the multiple sources to be accessed by a single access from a user to configure said merging driver.

25. The computer program product of claim 22, wherein at least a part of said computer program code is implemented on a server accessed by a client on which the remaining part of said computer program code is implemented.

26. A computer programmed such that it is capable of carrying out a method for enabling access of multiple sources (430, 440, 450) of a database (200) by a single access, said multiple sources requiring to be accessed by different drivers (425, 435, 445), said method comprising:
providing a common API (420) for individually accessing said multiple sources through said corresponding drivers; and
providing a merging driver (410) for accessing a plurality of said sources by a single access through said common API respectively accessing said multiple sources through said corresponding drivers.
